# EUROPÄISCHE PATENTSCHRIFT

(11) **EP 2 306 139 B1**
(45) Veröffentlichungstag und Bekanntmachung des Hinweises auf die Patenterteilung: **21.02.2018**
(21) Anmeldenummer: 10012721.6
(22) Anmeldetag: 01.10.2010
(51) Int. Cl.: F41H 7/04

(54) **Einbau einer Baugruppe, insbesondere eines Zwischenbodens in einem Fahrzeug**
Installation of an assembly, in particular an intermediate floor in a vehicle
Intégration d'un composant, notamment d'un fond intermédiaire dans un véhicule

(30) Priorität: 02.10.2009 DE 102009048049
(43) Veröffentlichungstag der Anmeldung: 06.04.2011
(73) Patentinhaber: Rheinmetall Landsysteme GmbH, 29345 Unterlüß (DE)
(72) Erfinder: Möll, Horst, 34128 Kassel (DE); Weiber, Andreas, 34127 Kassel (DE); Östreicher, Martin, 34346 Hann. Münden (DE)
(74) Vertreter: Horn Kleimann Waitzhofer Patentanwälte PartG mbB

(56) Entgegenhaltungen:
- EP-A1- 1 972 491
- EP-A2- 2 103 478
- WO-A1-2006/108613

## Beschreibung

Die Erfindung bezieht sich auf eine Möglichkeit eines entkoppelten Einbaus eines Zwischenbodens, Tisches, Kasten, Schrankes etc. (= Baugruppe) in einem Fahrzeug, wie Landfahrzeug, Luftfahrzeug oder Wasserfahrzeug oder anderen Objekten. Diese Möglichkeit soll insbesondere die bei Minen- oder IED-Sprengungen auftretenden Kräfte derart aufnehmen, dass sie nicht auf die Unterschenkel von Personen einwirken bzw. eben minimiert werden. Daneben bieten sich weitere Einsatzmöglichkeiten der Erfindung an, ist also nicht nur in Bezug auf Ansprengungen beschränkt.

Einen Sicherheitsboden als Zwischenboden offenbart die EP 1 239 747 A2. Dieser kann zum Fahrzeugstillstand beispielsweise angesenkt werden, damit die Besatzung für das Aussteigen und Aufsitzen keine Beeinträchtigung durch eine verminderte Innenraumhöhe erfährt. Der höhenverstellbare Zwischenboden ist dazu oberhalb des Fahrzeugbodens an Befestigungspunkten an den Seitenwänden des Fahrzeuginnenraumes befestigt. Durch die Beabstandung wird die Übertragung des durch Minenblast eingekoppelten Schocks auf die Füße verhindert, ohne dass dabei die Besatzung durch eine fixierte Beinposition in der Einsatzbereitschaft eingeschränkt wird. Das Bewegen des Zwischenbodens erfolgt vorzugsweise motorisch.

Wenngleich sich diese Variante in der Praxis bewährt hat, stellt sich die Erfindung eine Verbesserung der Entkopplung von Zwischenboden und Fahrzeug vor.

Diese Aufgabe wird durch die Merkmale des Patentanspruchs 1 gelöst. Vorteilhafte Ausgestaltungen sind in den Unteransprüchen aufgeführt.

Der Erfindung liegt die Idee zugrunde, den Zwischenboden, Tische oder sonstige Einbaugruppen mittels Gurte vom Fahrzeug bzw. Fahrzeugboden zu entkoppeln.

Der Einsatz von Gurten insbesondere zum Entkoppeln von Sitzen etc. ist bereits bekannt. So wird in der nicht vor veröffentlichten DE 10 2008 063 804.8 eine Befestigung eines Universaltraggestells für einen Sitz mittels Gurte fest am Fußboden angestrebt. Das minensichere Sitztragwerk selbst zeichnet sich dadurch aus, dass die Anbindung als auch das Tragwerk entsprechend der Minenbelastung ausgelegt werden können. Die Anbindung des Tragwerkes an einem·Dach, wie Fahrzeugdach, erfolgt je nach Belastung starr, mittels Gurten oder über Crashelemente, die Anbindung an den Fahrzeugboden wird wie bereits erwähnt mit Hilfe von Gurten bewerkstelligt. Die Gurte können sich bei einem Einbeulen des Bodens entspannen, eine Krafteinleitung in die Sitze erfolgt nicht.

Eine weitere Sitzanordnung mit Gurten wird zudem in der DE 10 2007 048 486 B3 beschrieben. Die Sitzanordnung für Land-, See- oder Luftfahrzeuge weist einen das Gesäß eines Benutzers unterfangenden, vertikal verstellbaren Sitz sowie mehrere zwischen dem Sitz und Strukturteilen des Fahrzeugs angebrachte Seile/Gurte auf. Der Sitz bildet mittelbar den Bestandteil einer Plattform, die entlang der Seile verlegerbar sowie in der jeweiligen Position an den Seilen lagefixierbar ist. Die Seile können dabei über eine Höheneinstellvorrichtung geführt werden.

Mit einer Schock absorbierenden Halterung, insbesondere eines Regalsystem beschäftigt sich des Weiteren die nicht vor veröffentlichte DE 10 2009 026 333.5. Die Halterung zeichnet sich dadurch aus, dass sie hauptsächlich nur aus Haupttraggurten und Quertraggurten besteht, die ihrerseits miteinander über einfache Verknüpfungen, Knoten etc. verbindbar sind. Auf den Quertraggurten liegt dann je Etage eine Trägerplatte auf, die ihrerseits diverse Eigenkomponenten aufnehmen kann. Es werden somit nur Gurte in die Konstruktion eingebunden, wobei in die Gurte in festen Bereichen Verbindungsstellen vorgesehen sind, sodass z. B. Schubladen realisierbar sind.

Aus der US 2005/0249568 A1 ist eine Befestigung eines Körpers auf einer Ladefläche eines Fahrzeuges mittels Gurte bekannt.

Die EP 1 972 491 A1 beschreibt eine Vorrichtung zum Aufhängen eines Objekts in einem Fahrzeug. Das Objekt ist hierzu mit Hilfe eines unelastischen und hochfesten Seils, das über Umlenkungen geführt ist, in dem Fahrzeug aufgehängt.

Diese Grundidee einer Gurtbefestigung greift auch die vorliegende Erfindung auf. Im Gegensatz zu den bekannten Gurtführungen wird Jedoch eine Umlenkung eingebunden. In der normalen Nutzung sind diese bezogen auf den zu haltenden Gegenstand / Baugruppe straff. Bei Nachgabe des Befestigungspunktes bildet diese Konstruktion ein Gurtlos, sodass der zu haltende Gegenstand / Baugruppe In seiner Position verbleibt, der Befestigungspunkt sich diesem / dieser jedoch nähem kann.
Bei einer Befestigung eines Zwischenbodens als Baugruppe im Fahrzeug würde dieser bevorzugt über ein oder mehrere Gurtbänder oder Seile mit dem Fahrzeugboden oder angrenzende Fahrzeugstrukturen verbunden werden. Die / der Anbindpunkt(e) am Zwischenboden oder der Baugruppe etc und Fahrzeugstruktur bilden in gedachten Linien beispielsweise ein V oder ein auf dem kopfstehendes V (nach). Dadurch wird der Zwischenboden oder die Baugruppe etc in der Fahrzeugbreite zentriert zumindest aber in irgendeiner Weise befestigt. Ein zweites Gurtband oder weitere Gurtbänder (Seile) werden mit dem Fahrzeugboden oder angrenzende Strukturen unterhalb des Zwischenbodens befestigt. Über eine oberhalb des Zwischenbodens befindlichen Umlenkung(en) wird der Zwischenboden nach oben abgespannt. Damit ist der Zwischenboden im Fahrzeug fest fixiert. Das Gesamtsystem ist im Fahrbetrieb straff gehalten, die Gurte / Seile gestrafft. Kommt es zu einer Minen- und / oder IED-Ansprengung etc., beult sich zuerst der Boden nach oben. Durch die Verformung des Bodens werden die Befestigungspunkte der Gurte des Zwischenbodens nach oben gedrückt. Dadurch ergibt sich eine Entlastung des Zwischenbodens. Parallel dazu bewegt sich das gesamte Fahrzeug In großer Beschleunigung senkrecht nach oben. Durch das Entlasten der Abspanngurte (-seile) wird die Beschleunigung der Zwischenböden in senkrechter Richtung heruntergesetzt, sodass die sonst auf die Unterschenkel einwirkenden Kräfte sogar minimiert werden können. D. h., durch die Art und Welse der Befestigung der Zwischenböden wird eine gegenläufige (nach unten) wirkende senkrechte Bewegung ermöglicht, wodurch die Beschleunigungskräfte nach oben reduziert werden. Erfindungsgemäß ist wenigstens eine Reißnaht oder Sollbruchstelle in den Gurten bzw. Seilen vorgesehen, die ihrerseits mit einem so genannten zusätzlichen Gurtlose (Seillose) kombiniert werden können. - Bekannt sind solche Reißnähte beispielsweise aus der Branche der Fahrzeugrückhaltesysteme. - So wird in besonderen Fällen der Gurt / das Seil verlängert, was beispielsweise durch Einbindung einer Schlaufe realisiert werden kann. Wird eine bestimmte Kraft überschritten, reißt diese Naht und gibt diese Schlaufe oder auch nur Schlaufenabschnitte frei, die ihrerseits weitere Reißnähte besitzen können. Eine derartige Lösung hat sich als vorteilhaft gezeigt, wenn die Ansprengung beispielsweise nicht am vorderen / hintem Teil des Fahrzeuges erfolgt ist, sondern mittig. In diesem Fall würde der Befestigungspunkt in etwa stehen bleiben, obwohl eine Krafteinleitung mit Verformung des mittigen Bodenbereiches eingeleitet wurde. Durch das "lose geben" des Gurtbandes / Selles bleibt eine schwimmende Lagerung des Zwischenbodens gegenüber der Fahrzeugstruktur bei Ansprengung erhalten.

Anhand eines Ausführungsbelspiels der entkoppelten Einbindung eines Zwischenbodens in einem Fahrzeug soll die Erfindung näher erläutert werden. Es zeigt:
- Fig. 1: einen Zwischenboden mit Tragstruktur zur Sitzaufnahme in einer perspektivischen Draufsicht,
- Fig. 2: eine vergrößerte Darstellung der Befestigung des Zwischenbodens mit einem imaginären Fußboden bzw. Fahrzeugwanne,
- Fig. 3: eine seitliche Darstellung des Gesamtsystems.

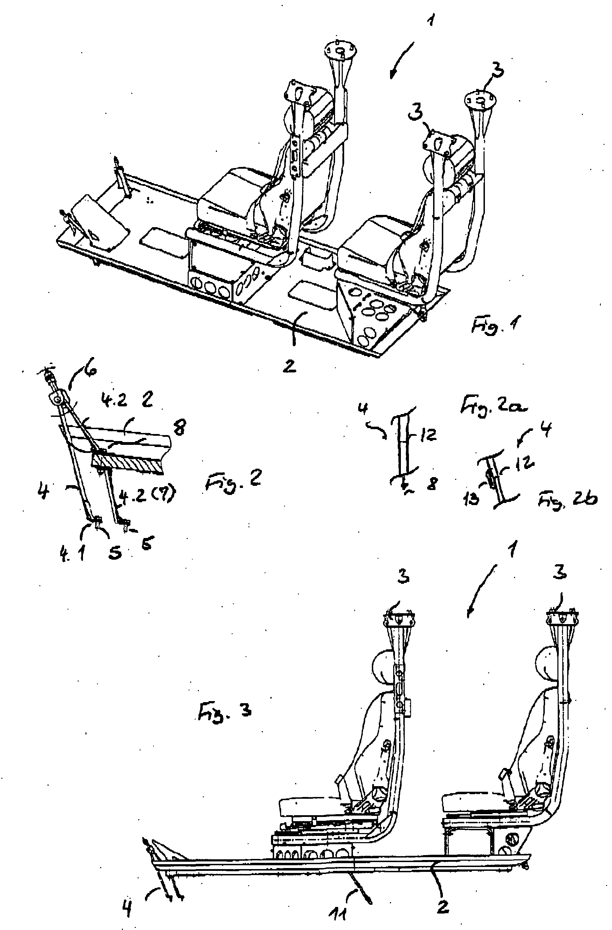

In Fig. 1 ist mit 1 zwei Tragstrukturen, ähnlich der DE 10 2008 063 804.8, gekennzeichnet, die beispielsweise direkt mit einem Zwischenboden 2 oder Ober Gurte etc. mit diesem verbunden sind. Die Strukturen 1 können Ober Befestigungen 3 mit einem nicht näher dargestellten Fahrzeugdach verbunden bzw. an diesem befestigt werden.

Der Zwischenboden 2 ist Ober wenigstens einen Gurt 4 mit einer hier nicht näher dargestellten Fahrzeugstruktur verbunden (Fig. 2). Der beispielsweise als Gurtband ausgeführte Gurt 4 ist mit seinem ersten Ende 4.1 an dieser Fahrzeugstruktur, beispielsweise dem Fahrzeugboden, über eine Verschraubung 5 etc. verbunden. Das andere Ende 4.2 wird über eine Umlenkung 6 geführt und mit dem Zwischenboden 2 derart verbunden bzw. an diesem angebunden, dass dieser an diesem Anbindpunkt 8 vom Gurtbandende 4.2 gehalten wird. Das Gurtband 4 kann zur weiteren Fixierung des Zwischenbodens 2 durchgeschleift und ebenfalls am Fahrzeugboden befestigt werden. Es ist jedoch bevorzugt ein weiteres Gurtband / Sell 7 vorzusehen, das den Zwischenboden 2 zum Fahrzeug fixiert.

Flg. 3 zeigt das Gesamtsystem 10 in einer seitlichen Darstellung. Wenngleich hier eine mittige zusätzliche Fixierung 11 des Zwischenbodens 2 erkennbar ist, kann auch im hinteren Bereich ein Gurtband mit Umlenkung wie bereits beschrieben vorgesehen werden.

In einer besonderen Ausführung (Flg. 2a) weist das Gurtband 4 ein eingebautes Gurtlos auf, das bei einer bestimmten Krafteinwirkung freigegeben wird. Dazu weist das Gurtband 4 bzw. Seil wenigstens eine Sollbruchstelle 12 oder eine Art Reißnaht auf, durch das das eingebaute Gurt- bzw. Seillos 13 (Fig. 2b) sich nach dem Aufreißen dieser Stelle 12 entfalten kann. Die Bestimmung der Qualität der Stelle 12, d. h., bei welchem Kraftaufkommen sie reißen sollte, bestimmt sich nach der entsprechenden Vorgabe, In diesem Ausführungsbeispiel nach der Kraft, die nicht überschritten werden darf, da diese sonst zu groß für die Unterschankel wäre (beispielsweise 3 kN). Ebenso bestimmt sich die Länge das eingebauten Loses. Die Kraft als auch die Loslänge kann für andere Anwendungen Jedoch je nach Gegebenheit angepasst werden.

## Patentansprüche

1. Einbau eines Zwischenbodens (2) oder anderer zu entkoppelnder Baugruppen in einem Fahrzeug unter Zuhilfenahme von wenigstens einem Gurt und/oder Seil (4, 7), wobei der wenigstens eine Gurt und/oder das wenigstens eine Seil (4) über wenigstens eine Umlenkung (6) geführt wird, wobei ein Ende (4.1) an der Fahrzeugstruktur und das andere Ende (4.2) über wenigstens einen Anbindpunkt (8) am Zwischenboden (2) oder an der Baugruppe ebenfalls mit der Fahrzeugstruktur verbunden wird, wobei der Gurt (4) bzw. das Seil ein eingebautes Los (13) aufweist, wobei das Los (13) bei einer bestimmten Krafteinwirkung freigegeben wird, wodurch sich der Gurt (4) bzw. das Seil verlängert, und wobei zur Freigabe der Gurt/das Seil (4) wenigstens eine Sollbruchstelle (12) oder eine Art Reißnaht aufweist, durch die das eingebaute Los (13) sich nach dem Aufreißen dieser Sollbruchstelle (12) entfalten kann.

2. Einbau nach Anspruch 1, **dadurch gekennzeichnet, dass** der/die Anbindpunkt(e) (8) am Zwischenboden (2) oder der Baugruppe und Fahrzeugstruktur in gedachten Linien beispielsweise ein V oder ein auf dem kopfstehendes V nachbilden.

3. Einbau nach Anspruch 1 oder 2, **dadurch gekennzeichnet, dass** ein weiteres Gurtband/Seil (7) vorgesehen werden kann, das den Zwischenboden (2) zum Fahrzeug fixiert.

## Claims

1. Installation of an intermediate floor (2) or other assemblies that are to be uncoupled in a vehicle with the aid of at least one belt and/or cable (4, 7), wherein the at least one belt and/or the at least one cable (4) is guided via at least one deflection (6), wherein one end (4.1) is connected to the vehicle structure and the other end (4.2) is likewise connected to the vehicle structure via at least one attachment point (8) on the intermediate floor (2) or on the assembly, wherein the belt (4) or the cable comprises an integrated breakaway tab (13), wherein the breakaway tab (13) is released when a specific magnitude of force is applied, as a result of which the belt (4) or the cable is extended, and wherein for releasing purposes the belt/cable (4) comprises at least one predetermined breaking point (12) or another type of tear seam by means of which it is possible to unfold the integrated breakaway tab (13) after this desired breaking point (12) has ruptured.

2. Installation according to claim 1, **characterised in that** the attachment point(s) (8) emulate(s) by way of example a V or an inverted V in imaginary lines on the intermediate floor (2) or the assembly and vehicle structure.

3. Installation according to claim 1 or 2, **characterised in that** a further belt band/cable (7) can be provided that fixes the intermediate floor (2) to the vehicle.

## Revendications

1. Installation d'un fond intermédiaire (2) ou d'autres assemblages à découpler dans un véhicule à l'aide d'au moins une sangle et/ou corde (4, 7), l'au moins une sangle et/ou l'au moins une corde (4) étant dirigée par le biais d'au moins un renvoi (6), une extrémité (4.1) étant reliée au niveau de la structure du véhicule et l'autre extrémité (4.2) également à la structure du véhicule par l'intermédiaire d'au moins un point d'attache (8) au niveau du fond intermédiaire (2) ou au niveau de l'assemblage, la sangle (4) respectivement la corde présentant un lot installé (13), le lot (13) étant libéré lors de l'action d'une certaine force permettant d'allonger la sangle (4) respectivement la corde, et présentant, pour libérer la sangle/corde (4), au moins un point de rupture (12) ou un type de joint de déchirure à travers lequel le lot installé (13) peut se déployer après la déchirure de ce point de rupture (12).

2. Installation selon la revendication 1, **caractérisé en ce que** le(s) point(s) d'attache (8) au niveau du fond intermédiaire (2) ou de l'assemblage et de la structure du véhicule représentent par exemple un V ou un V à l'envers selon des lignes imaginaires.

3. Installation selon la revendication 1 ou 2, **caractérisé en ce qu'**une autre bande de sangle/corde (7) peut être prévue pour fixer le fond intermédiaire (2) par rapport au véhicule.
